# EUROPEAN PATENT APPLICATION

(11) **EP 4 250 591 A1**
(43) Date of publication of application: **27.09.2023**
(21) Application number: 22163884.4
(22) Date of filing: 23.03.2022
(51) Int. Cl.: H04B 7/185

(54) **A PRIORI COMMUNICATION SYSTEM ADAPTATION**

(71) Applicant: Siemens Aktiengesellschaft, 80333 München (DE)
(72) Inventor: Michailow, Nicola, 81825 München (DE); Zeiger, Florian, 85635 Höhenkirchen-Siegertsbrunn (DE)
(74) Representative: Siemens Patent Attorneys

(57) **Abstract**

The invention discloses an automated method for the adaption of a communication system, whereby a wireless primary communication system (WS1) and a wireless secondary communication system (WS2) are using an at least one shared frequency band or shared frequency, whereby the primary communication system (WS1) and the secondary communication system (WS2) are moving relatively to each other, and whereby the primary communication system (WS1) has priority access to the shared frequency band or shared frequency, characterized in,
- that the secondary communication system (WS2) is taken measures to adapt the secondary communication system (WS2), if an upcoming priority use of the shared frequency band or shared frequency is determined by the secondary communication system (WS2), and
- that the secondary communication system (WS2) is stopping to use the shared frequency band or the shared frequency in case of the priority of the primary communication system (WS1).

A corresponding communication system is disclosed as well.

## Description

### FIELD OF THE DISCLOSURE

The present invention relates to an automated method for the adaption of a communication system, whereby a wireless primary communication system and a wireless secondary communication system are using at least one shared frequency band or shared frequency, whereby the primary communication system and the secondary communication system are moving relatively to each other, and whereby the primary communication system has priority access to the shared frequency band or shared frequency. The present invention further relates to a corresponding communication arrangement.

### BACKGROUND OF THE DISCLOSURE

As 6G research efforts are gaining momentum, the question which spectrum bands in the range between 100 GHz and 1 THz can be used for wireless communication networks is at the heart of current discussions.

Many frequencies in this range are currently assigned for exclusive use, e.g., by earth exploration satellite services (EESS). EESS pass regularly throughout a day (or in the course of weeks) over certain geographical location and take measurements of various kinds.

Often, other services like mobile networks are not allowed to operate in these bands, because they could pose as interference to the sensitive measurement equipment of the satellites. While this has worked out in the past, in the future, blocking entire frequency bands for exclusive use by satellites might not be an economically feasible solution.

Known communication systems adapt the wireless channel reactively to disturbances. The transmitter sends a pre-agreed signal that is used at the receiver side to measure the signal quality and detect interference. Based on this measurement, future values of relevant parameters in the communication system are adapted (e.g., frequency band, order of modulation, coding rate, etc.).

### SUMMARY OF THE DISCLOSURE

The objective of the present invention is to provide a solution for improving wireless terrestrial communication, e.g., 6G.

To accomplish the objective, the present invention provides a solution according to the independent claims. Advantageous embodiments are provided in the dependent claims.

Current solutions act to decreased signal quality after the event occurs. According to an aspect of the invention, the disclosed solution uses context information that is known a priory to prepare the communication system for an upcoming/planned/expected drop/outage in signal quality.

From a ground station perspective, for example the intermittent nature of EESS would in principle allow for a timeduplex operation with terrestrial mobile communication systems. This would lead to a more efficient use of scarce spectrum resources worldwide.

Since the orbits of such satellites are known in advance, the times when a ground-based transceiver is not allowed to communicate within the satellite's frequencies can be pre-calculated. This information can be then used to adapt the ground-based communication network, e.g., such, that its participants experience as little changes to the QoS of their ongoing transmissions as possible.

The invention claims an automated method for the adaption of a communication system, whereby a wireless primary communication system and a wireless secondary communication system are using at least one shared frequency band or shared frequency, whereby the primary communication system and the secondary communication system are moving relatively to each other, whereby the primary communication system has priority access to the shared frequency band or shared frequency, and whereby the secondary communication system is taken measures to adapt the secondary communication system, if an upcoming priority use of the shared frequency band or shared frequency is determined by the secondary communication system, and whereby the secondary communication system is stopping to use the shared frequency band or the shared frequency in case of the priority of the primary communication system.

The shared frequency band or shared frequency must never be disturbed by the secondary communications system if the primary communication system is using it in the same geographical area. For this reason, both communication systems operate in time-division.

The invention has the advantage of a multi-use of scarce radio resources.

In a further embodiment of the method the secondary communication system is adapted such as to minimize degradation of communication services used by users of the secondary communication system and/or to prioritize services of predefined users.

In a further embodiment of the method the measures comprise:
- changing of radio access technology or radio access technology parameters,
- scaling down resources assigned to best effort users, and/or
- notifying applications and/or users about expected quality of service change in advance.

In a further embodiment of the method the secondary communication system is continuously monitoring for upcoming contact windows between the radio links of the primary and secondary communication systems in the shared frequency band or the shared frequency.

In a further embodiment of the method the contact window is determined by using data of the geographical position of at least one transmitting device of the primary communication system and/or the secondary communication system.

In a further embodiment of the method the primary communication system is a satellite system, and the secondary communication system is a terrestrial communication system.

The invention further claims a communication system, comprising a wireless secondary communication system, whereby a wireless primary communication system and the secondary communication system are using an at least one shared frequency band or shared frequency, whereby the primary communication system and the secondary communication system are moving relatively to each other, and whereby the primary communication system has priority access to the shared frequency band or shared frequency,
whereby the secondary communication system is configured to take measures to adapt the secondary communication system, if an upcoming priority use of the shared frequency band or shared frequency is determined by the secondary communication system, and to stop the secondary communication system to use the shared frequency band or the shared frequency in case of the priority of the primary communication system.

In a further embodiment of the system the secondary communication system is designed to minimize degradation of communication services used by users of the secondary communication system and/or to prioritize services of predefined users in case of the adaptation.

In a further embodiment of the system the measures comprise:
- changing of radio access technology or radio access technology parameters,
- scaling down resources assigned to best effort users, and/or
- notifying applications and/or users about expected quality of service change in advance.

In a further embodiment of the system the secondary communication system is configured to continuously monitor for upcoming contact windows between the radio links of the primary and secondary communication systems in the shared frequency band or the shared frequency.

In a further embodiment of the system the secondary communication system is designed to determine the contact window by using data of the geographical position of at least one transmitting device of the primary communication system and/or the secondary communication system.

In a further embodiment of the system the primary communication system is a satellite system, and the secondary communication system is a terrestrial communication system.

Further benefits and advantages of the present invention will become apparent after a careful reading of the detailed description with appropriate reference to the accompanying drawings.

### BRIEF DESCRIPTION OF THE DRAWINGS

- FIG. 1: shows an illustration of the communication network, and
- FIG. 2: shows a flow-chart of the method for a communication network adaptation.

### DETAILED DESCRIPTION OF THE DISCLOSURE

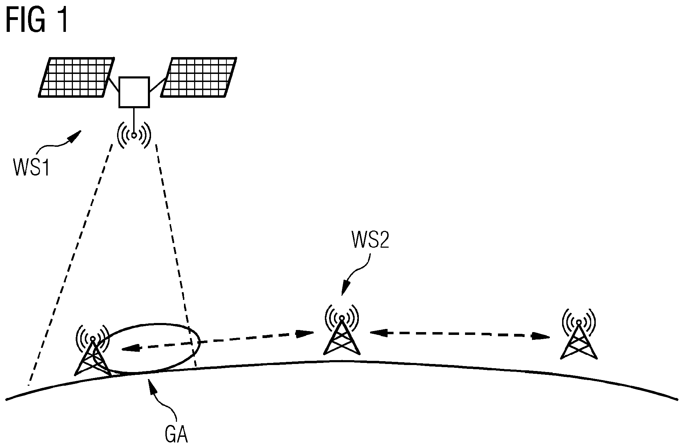

As an embodiment of the invention FIG. 1 shows an application whereby the wireless primary communication system is a satellite communication system WS1 and the wireless secondary communication system is a ground-based/terrestrial communication system WS2 (e.g., 5G or 6G). As seen from FIG. 1 the reference sign GA denotes the georgical area where satellite service and terrestrial communication service need to co-exist in the same frequency band, e.g., through time-division duplex operation.

In order to achieve higher spectrum efficiency, the ground-based system is allowed to operate in a frequency band that is shared with satellite services (e.g., EESS) of the satellite communication system. The satellite service has priority access to said frequency bands and it must never be disturbed by the ground-based communications network. For this reason, the satellite service and the ground-based communication system operate in time-division.

Therefor a method is disclosed, that allows the ground-based communication system to adapt to a known upcoming (future) blockage in one or more of the frequency bands that it is using.

The exact time when for example EESS satellites pass over a certain geographic area is known in advance, e.g., it can be calculated based on trajectory data from publicly available databases. This information is used by the terrestrial communication system to proactively act. Before relevant QoS metrics degrade, it adapts its parameters.

Possible measures include:
- Change network topology / using another route through the network
- Change radio access technology (RAT) or RAT parameters (5G, 6G, WLAN; switch between mmW and sub6 GHz)
- Scale down resources assigned to best effort users (limit best effort traffic in advance before other users' critical traffic is affected)
- Notify applications about expected QoS change in advance

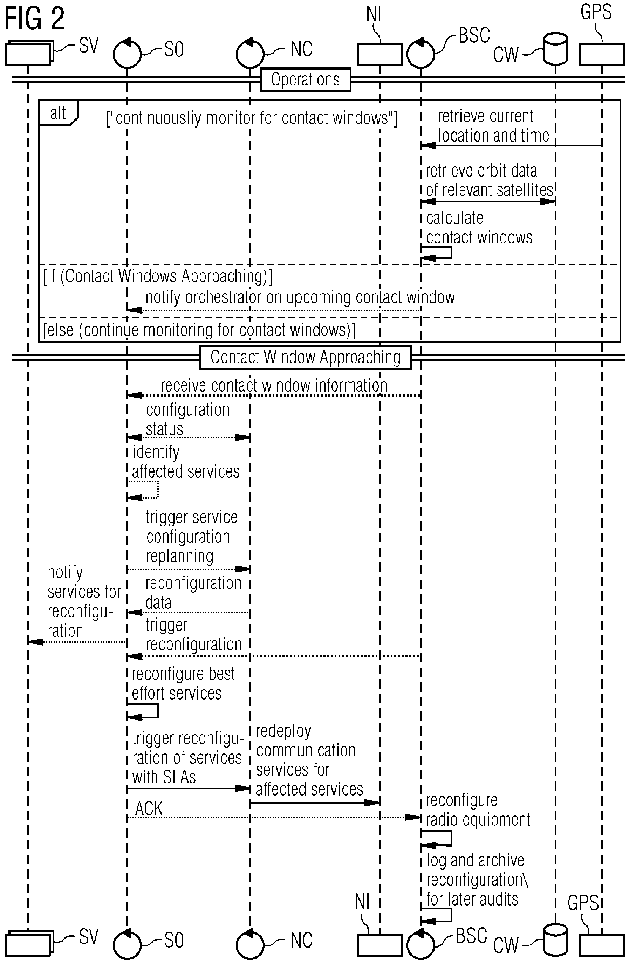

The secondary communication system comprises the following components according to Fig. 2:
Services SV: are the services (e.g., monitoring and control of country-wide spanning electric power networks, etc.) that are hosted on the affected ground-based infrastructure (e.g., communicate via radio link of the base station).
Service Orchestration SO: performs planning for services SV in terms of placement (i.e., which services use which exact communication and compute resources at what exact time). Therefore, the service requirements translated to SLAs and the corresponding KPIs for the system.
Network Controller NC: receives requests (e.g., from Service Orchestration SO) for mapping given communication services SV (that are associated with corresponding SLAs) to the network infrastructure. This component is administration access to the network infrastructure.
Network Infrastructure NI: are the HW and SW components that host the network and communication stack, incl. wireless as well as wired communication devices.
Base Station Controller BSC: is in control of a ground-based radio device, handling a set of wireless communication links and the corresponding antennas. The Base Station Controller can fully configure the physical parameters of the radio devices as well as the connectivity to higher protocol layers and also wired communication links.
Contact Window Database CW: is a database that contains space and time information for past and future contacts between a given ground-based communication system at a certain location and orbiting satellites. Optional, in case of a mobile/moving Base Station, satellite orbit data of relevant satellites is hosted and can be used with the location to calculate the contact times.
Location GPS: is either a service, a local storage or a GPS interface and provides the device position.

Normal operations according to the flow-chart of FIG. 2 assume a ground-based communication system with an already deployed set of services SV (e.g., a number of best effort services, as well as constrained services, critical services, and services with SLAs) running. This ground-based communication system has wireless communication links that operate as secondary user in a satellites frequency band. The base station controller BSC continuously monitors for upcoming contact windows between the ground-based communication system and satellites, which in near future (e.g., one to three minutes) will require the reconfiguration of at least one radio link of the ground-based system, which is currently used by a service.

First Option - stationary Base Station: the contact window database CW contains pre-calculated data sets for all relevant satellite contact windows for the base station and these data sets are used by the base station controller BSC to monitor upcoming contact windows and schedule appropriate reconfiguration of the radio link and the network infrastructure.

Second Option - mobile Base Station: the contact window database CW contains satellite orbit data and the mobile base station controller BSC can calculate upcoming contact windows based on its current location and trajectory and the orbit data of the satellites. The base station controller BSC monitors upcoming contact windows and schedules appropriate reconfiguration of the radio link and the network infrastructure.

Third Option - mobile Base Station and Contact Window calculation as a service: in this case, the Base Station Controller BSC sends it position and the radio frequency of interest to a service SV that calculates the upcoming contact window times for that request. The results of this calculation are sent back to the Base Station Controller BSC.

Operations with a contact window approaching in terms of time and spacer (see FIG. 2):
As soon as the base station controller BSC detects approaching contact windows the replanning procedure is started proactively before an outage occurs, by identifying all services that are affected by the required change of the radio link configuration. The Service Orchestration SO interacts with the Network Controller NC to identify suitable network configurations with a minimum of negative effects on the currently hosted services. Constrained services and services with SLAs are therefore handled with higher replanning priority.
As soon as suitable configurations for these services are calculated, remaining best effort services are considered for reconfiguration, using eventually remaining resources. Affected services now are notified on the upcoming changes. As soon as the contact time window is about to start, the preplanned configurations are executed and deployed. The Network Controller redeploys the services by reconfiguration of the network infrastructure (e.g., re-routing of flows, resource allocations, prioritization), and the base station controller BSC reconfigures the affected radio links (see more details on the individual functions in FIG. 2).

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

As an example, for the extension beyond satellite systems the system can be extended such that a secondary user of a given frequency band adapts to any other moving primary user with known schedule and trajectory (e.g., trains, aircrafts, drones, AGVs, etc.).

## Claims

1. An automated method for the adaption of a communication system, whereby a wireless primary communication system (WS1) and a wireless secondary communication system (WS2) are using an at least one shared frequency band or shared frequency, whereby the primary communication system (WS1) and the secondary communication system (WS2) are moving relatively to each other, and whereby the primary communication system (WS1) has priority access to the shared frequency band or shared frequency,
**characterized in,**
- **that** the secondary communication system (WS2) is taken measures to adapt the secondary communication system (WS2), if an upcoming priority use of the shared frequency band or shared frequency is determined by the secondary communication system (WS2), and
- **that** the secondary communication system (WS2) is stopping to use the shared frequency band or the shared frequency in case of the priority of the primary communication system (WS1) .

2. The method according to claim 1,
**characterized in,**
**that** the secondary communication system (WS2) is adapted such as to minimize degradation of communication services (SV) used by users of the secondary communication system (WS2) and/or to prioritize services of predefined users.

3. The method according to claim 1 or 2,
**characterized in,**
**that** the measures comprise:
- changing of radio access technology or radio access technology parameters,
- scaling down resources assigned to best effort users, and/or
- notifying applications and/or users about expected quality of service change in advance.

4. The method according to one of the previous claims,
**characterized in,**
**that** the secondary communication system (WS2) is continuously monitoring for upcoming contact windows (CW) between radio links of the primary and secondary communication systems (WS1 and WS2) in the shared frequency band or the shared frequency.

5. The method according to claim 4,
**characterized in,**
**that** the contact window (CW) is determined by using data of the geographical position of at least one transmitting device of the primary communication system (WS1) and/or of the secondary communication system (WS2).

6. The method according to one of the previous claims,
**characterized in,**
**that** the primary communication system (WS1) is a satellite system, and the secondary communication system (Ws2) is a terrestrial communication system.

7. A communication system, comprising a wireless secondary communication system (WS2), whereby a wireless primary communication system (WS1) and the secondary communication system (WS2) are using an at least one shared frequency band or shared frequency, whereby the primary communication system (WS1) and the secondary communication system (WS2) are moving relatively to each other, and whereby the primary communication system (WS1) has priority access to the shared frequency band or shared frequency,
**characterized in**
**that** the secondary communication system (WS2) is configured to take measures to adapt the secondary communication system (WS2), if an upcoming priority use of the shared frequency band or shared frequency is determined by the secondary communication system (WS2), and to stop the secondary communication system (WS2) to use the shared frequency band or the shared frequency in case of the priority of the primary communication system (WS1).

8. The system according to claim 7,
**characterized in,**
**that** the secondary communication system (WS2) is designed to minimize, in case of the adaption, degradation of communication services (SV) used by users of the secondary communication system (WS2) and/or to prioritize services of predefined users.

9. The system according to claim 7 or 8,
**characterized in,**
**that** the measures comprise:
- changing of radio access technology or radio access technology parameters,
- scaling down resources assigned to best effort users, and/or
- notifying applications and/or users about expected quality of service change in advance.

10. The system according to one of the claims 7 to 9,
**characterized in,**
**that** the secondary communication system (WS2) is configured to continuously monitor for upcoming contact windows (CW) between radio links of the primary and secondary communication systems (WS1 and WS2) in the shared frequency band or the shared frequency.

11. The system according to claim 10,
**characterized in,**
**that** the secondary communication system (WS2) is designed to determine the contact window (CW) by using data of the geographical position of at least one transmitting device of the primary communication system (WS1) and/or the secondary communication system (WS2).

12. The system according to one of the claims 7 to 11,
**characterized in,**
**that** the primary communication system (WS1) is a satellite system, and the secondary communication system (Ws2) is a terrestrial communication system.
